# EUROPEAN PATENT SPECIFICATION

(11) **EP 3 676 326 B1**
(45) Date of publication and mention of the grant of the patent: **14.09.2022**
(21) Application number: 18737789.0
(22) Date of filing: 18.06.2018
(51) Int. Cl.: C08L 23/12, B60N 3/04, C08L 53/02, C08K 3/26, C08L 91/00

(54) **THERMOPLASTIC POLYOLEFIN FOR NON-CARPETED FLOORING**
THERMOPLASTISCHES POLYOLEFIN FÜR BODENBELAG OHNE TEPPICH
POLYOLÉFINE THERMOPLASTIQUE POUR REVÊTEMENT DE SOL NON MOQUETTÉ

(30) Priority: 30.08.2017 US 201762551843 P
(43) Date of publication of application: 08.07.2020
(73) Proprietor: Dow Global Technologies LLC, Midland, MI 48674 (US)
(72) Inventor: SELISKAR, James T., Midland, MI 48674 (US); HAYS, Ted, Copley, OH 44321 (US); OELBERG, James D., Midland, MI 48674 (US)
(74) Representative: Beck Greener LLP
(86) International application number: PCT/US2018/038051
(87) International publication number: WO 2019/045833

(56) References cited:
- EP-A1- 1 582 563
- EP-A1- 3 070 123
- EP-A2- 1 031 608
- US-A1- 2014 288 225
- US-B1- 6 372 847

## Description

### FIELD OF THE INVENTION

The field of the invention relates generally to a polymer blend composition, and more particularly to a thermoplastic polymer blend composition that can be used to manufacture a non-carpeted vehicle flooring material.

### BACKGROUND OF THE INVENTION

Automobile manufactures require that non-carpeted flooring material have good physical properties, such as abrasion resistance, scratch and mar resistance, low gloss, and grain definition, while being colorable, durable, and able to withstand large temperature changes without failure. In addition, automobile manufactures require that the flooring material has a low modulus (elasticity) for ease of installation into a vehicle.

Known non-carpeted flooring materials may be manufactured from blends of impact modified polypropylene and high melt strength polypropylene (partially crosslinked). The impact modified polypropylene creates flexibility to facilitate installation into a vehicle and contributes to low gloss, while the high melt strength polypropylene facilitates scratch and mar resistance, and provides adequate strength during a thermoforming process. However, these known flooring materials have a narrow window of temperature range for thermoforming. High crystallinity of the material leads to sharp drop-off in melt strength during the thermoforming process. In addition, these known flooring materials also significantly increase in gloss as forming temperatures are increased which does not meet automobile manufactures requirements.

Thermoplastic polyolefin (TPO) compositions for use in sheet have been developed for automotive applications. TPO blends of one or more ethylene/α-olefin elastomers and one or more polypropylenes to make fabricated articles or products, e.g., instrument panels, door panels, and non-carpeted flooring are known. See, for example, USP 6,372,847; 6,680,361; 7,750,104; 8,304,496; and 8,431,651. These blends and products demonstrate many desirable qualities, e.g., good to superior melt strength and processability, moldability, impact and mar resistance, modulus, elasticity, and the like. However, for some applications, these TPO compositions are not well suited for fabrication methods other than thermoforming, for example, injection molding and/or for providing acceptable physical properties to fabricated articles made therefrom.

It would be desirable to have an elastomer composition which can be injection molded into non-carpeted flooring applications having improved physical properties including reduced stress whitening and low odor.

### SUMMARY OF THE INVENTION

The present invention is such an elastomer composition. Said composition comprises, consist essentially of, consists of: (i) from 10 to 30 weight percent of a hydrogenated block copolymer produced by hydrogenating a block copolymer comprising at least one polymer block composed of a vinyl aromatic compound as a principal component and at least one polymer block composed of a conjugated diene compound as a principal component, said hydrogenated copolymer having a number average molecular weight less than or equal to 200,000 Daltons, preferably the hydrogenated block copolymer is styrene-ethylene/butylene-styrene (SEBS); (ii) from 5 to 30 weight percent of a propylene homopolymer and/or a propylene copolymer comprising propylene as a principal component, preferably a propylene homopolymer with a MFR equal to or less than 100 g/10 min; (iii) from 20 to 40 weight percent of a mineral oil; (iv) from 0.5 to 10 weight percent of a maleic anhydride grafted polymer, preferably a maleic anhydride grafted block copolymer, preferably SEBS, a maleic anhydride grafted polyethylene, preferably HDPE, or a maleic anhydride grafted polypropylene, preferably homopolymer of polypropylene; (v) from 10 to 45 weight percent of a non-surface treated filler, wherein the non-surface treated filler is a non-surface treated, colorless calcium carbonate; and (vi) optionally, from 0.1 to 10 weight percent of a polydimethylsiloxane and/or from 0.1 to 5 weight percent of a nucleating agent..

One embodiment of the present invention is a process to make a vehicle non-carpet flooring, preferably a truck non-carpet flooring or an automotive non-carpet flooring, using the elastomer composition disclosed herein above, preferably by injection molding.

Another embodiment of the present invention is an article comprising the above disclosed elastomer composition, preferably a vehicle non-carpet flooring, more preferably a truck non-carpet flooring or an automotive non-carpet flooring.

### DETAILED DESCRIPTION OF THE INVENTION

The elastomer composition of the present invention comprises, consists essentially of, or consists of: (i) a hydrogenated block copolymer having a number average molecular weight less than or equal to 200,000 Daltons; (ii) a propylene homopolymer and/or a propylene copolymer comprising propylene as a principal component; (iii) a mineral oil; (iv) a maleic anhydride grafted polymer; (v) a filler; and (vi) optionally, a polydimethylsiloxane and/or a nucleating agent.

Component (i) of the elastomer composition of the present invention is a hydrogenated block copolymer. Suitable hydrogenated block copolymers are obtained by hydrogenating a block copolymer which comprises at least one polymer block composed principally of a vinylic aromatic compound and at least one polymer block composed principally of a conjugated diene compound.

More specific examples of the aforesaid hydrogenated block copolymer include: (1) block copolymer of crystalline polyethylene and ethylene/butylene styrene random copolymer, said block copolymer being obtained by hydrogenating block copolymer of polybutadiene and butadiene-styrene random copolymer; and (2) block copolymer of polybutadiene and polystyrene, block copolymer of polyisoprene and polystyrene, diblock copolymer of crystalline polyethylene and polystyrene, said diblock copolymer being obtained by hydrogenating block copolymer of polybutadiene or ethylene-butadiene random copolymer and polystyrene, triblock copolymer (SEBS) of styrene-ethylene/butylene-styrene, a triblock copolymer (SEEPS) of styrene-ethylene-ethylene/propylene-styrene, and triblock copolymer (SEPS) of styrene-ethylene/propylene-styrene, in particular, block copolymer of styrene-ethylene/butylene-styrene, and block copolymer of styrene-ethylene/propylene-styrene. Any one of the above-exemplified hydrogenated block copolymer may be used alone or in combination with at least one other hydrogenated block copolymer mentioned above.

Preferably, the hydrogenated block copolymer has each a number-average molecular weight of at least 60,000 Daltons. Preferably, the upper limit imposed on the number-average molecular weight thereof, which however is equal to or less than 200,000 Daltons.

The content of noncrystalline styrene blocks in said hydrogenated block copolymer is in the range of preferably 10 to 70 percent by weight, more preferably 15 to 60 percent by weight. The noncrystalline styrene blocks therein have a glass transition temperature of preferably 60°C or higher, more preferably 80°C or higher. In addition, noncrystalline styrene blocks are preferable as polymers for linking the noncrystalline styrene blocks at both the ends. The hydrogenated block copolymer is usually used alone, but may be used in combination with at least one other thereof.

The hydrogenated block copolymer (i) is present in the elastomer composition of the present invention in an amount of equal to or greater than 10 weight percent, preferably equal to or greater than 12 weight percent, and more preferably equal to or greater than 14 weight percent based on the total weight of the elastomer composition. The hydrogenated block copolymer (i) is present in the elastomer composition of the present invention in an amount of equal to or less than 30 weight percent, preferably equal to or less than 28 weight percent, and more preferably equal to or less than 26 weight percent based on the total weight of the elastomer composition.

Component (ii) of the elastomer composition of the present invention is a propylene homopolymer and/or propylene copolymer comprising propylene as a principal component. The propylene polymer comprising propylene as a principal component is exemplified by the copolymer of propylene and a small amount of an alpha-olefin such as propylene/ethylene copolymer and propylene/4-methyl-1-pentene copolymer.

The polypropylene polymer in the elastomer composition according to the present invention may be produced through polymerization by using a metallocene catalyst, for instance, a metal complex of a compound containing cyclopentadienyl ring, and has an extremely narrow molecular weight distribution as compared with conventional polypropylene, whereby a volatile low molecular component is hardly contained.

Alternatively, the propylene polymer used in the elastomer composition of the present invention may be a conventional propylene polymer exemplified by isotactic polypropylene and atactic polypropylene, for instance, polypropylene which is obtained by polymerizing propylene in the presence of, for instance, Ziegler catalyst (titanium base). A random copolymer among the aforesaid copolymers is obtained in the presence of a small amount of ethylene or another alpha-olefin at the time of polymerization, while block copolymer is obtained by producing propylene homopolymer, and thereafter polymerizing ethylene in many cases.

No specific restriction is imposed upon said polymer, but Mw/Mn (Mw: weight-average molecular weight/Mn: number-average molecular weight) is usually in the range of 1.5 to 3.5. Preferably, the propylene homopolymer and/or propylene copolymer has a MFR in the range of 0.1 to 100 g/10 minutes. Preferably, the MFR of the propylene polymer is equal to or greater than 5 g/10 minutes, more preferably equal to or greater than 10 g/10 minutes. Preferably, the MFR of the propylene polymer is equal to or less than 50 g/10 minutes, and more preferably equal to or less than 25 g/10 minutes.

The propylene homopolymer or propylene copolymer (ii) is present in the elastomer composition of the present invention in an amount of equal to or greater than 5 weight percent, preferably equal to or greater than 6 weight percent, and more preferably equal to or greater than 7 weight percent based on the total weight of the elastomer composition. The propylene homopolymer or propylene copolymer (ii) is present in the elastomer composition of the present invention in an amount of equal to or less than 30 weight percent, preferably equal to or less than 25 weight percent, and more preferably equal to or less than 20 weight percent based on the total weight of the elastomer composition.

Component (iii) of the elastomer composition of the present invention is a mineral oil. The mineral oil assists in elastomer flow to fill the mold and give good surface appearance. It also helps hardness adjustment and therefore also tactile feel and flexibility important to the application.

Appropriate mineral oils for inclusion in the present invention include, for example, paraffinic hydrocarbons such as PRIMOL^{™} 352, a purified mixture of liquid saturated hydrocarbons that is commercially available from Exxon Mobil, MOTIVA STAR^{™} 12 available from Motiva Enterprises, LLC, Citgo DUOPRIME^{™} Oil 350 available from Citgo Petroleum Corporation, CONOPURE^{™} 12P, SONNEBORN SEMTOL^{™} 500, and HYDROBITE^{™} 550 PO OIL. The mineral oil is preferably a paraffinic oil, more preferably a high viscosity paraffin oil, because such oils provide the desired color and odor characteristics.

The mineral oil (iii) is present in the elastomer composition of the present invention in an amount of equal to or greater than 20 weight percent, preferably equal to or greater than 25 weight percent, and more preferably equal to or greater than 30 weight percent based on the total weight of the elastomer composition. The mineral oil (iii) is present in the elastomer composition of the present invention in an amount of equal to or less than 40 weight percent, preferably equal to or less than 37 weight percent, and more preferably equal to or less than 34 weight percent based on the total weight of the elastomer composition.

Component (iv) of the elastomer composition of the present invention is a maleic anhydride grafted polymer (MAH-g-polymer). Preferred polymers are polyolefins, such as ethylene homopolymers and/or copolymers, such as low density polyethylene (LDPE), linear low density polyethylene (LLDPE), high density polyethylene ( HDPE), linear ethylene polymers (LEP), substantially linear ethylene polymers (SLEP), polypropylene homopolymer and/or propylene copolymers; rubbers; block copolymers; or hydrogenated block copolymers such as the ones disclosed herein above, especially SEBS.

The MAH-g-polymer (iv) is present in the elastomer composition of the present invention in an amount of equal to or greater than 0.5 weight percent, preferably equal to or greater than 0.75 weight percent, and more preferably equal to or greater than 1.0 weight percent based on the total weight of the elastomer composition. The MAH-g-polymer (iv) is present in the elastomer composition of the present invention in an amount of equal to or less than 10 weight percent, preferably equal to or less than 9 weight percent, and more preferably equal to or less than 8 weight percent based on the total weight of the elastomer composition.

Component (v) of the elastomer composition of the present invention is a filler. The filler is a non-surface treated, colorless calcium carbonate, in other words, it is white. Preferred fillers have a particle size of 0.5 microns to 20 microns, more preferably of 1 microns to 10 microns.

The filler (v) is present in the elastomer composition of the present invention in an amount of equal to or greater than 10 weight percent, preferably equal to or greater than 20 weight percent, and more preferably equal to or greater than 25 weight percent based on the total weight of the elastomer composition. The filler (v) is present in the elastomer composition of the present invention in an amount of equal to or less than 45 weight percent, preferably equal to or less than 43 weight percent, and more preferably equal to or less than 40 weight percent based on the total weight of the elastomer composition.

Component (vi) of the elastomer composition of the present invention is a siloxane compound, preferably a silicone, a polydimethylsiloxane (PDMS), a hydroxyl-terminated polydimethylsiloxane, or a silanol terminated polydimethylsiloxane. Preferably, the siloxane has a viscosity of 50 cps to 100,000 cps, more preferably of 100 cps to 50,000 cps.

The siloxane compound (vi), if present in the elastomer composition of the present invention, is present in an amount of equal to or greater than 0.1 weight percent, preferably equal to or greater than 0.2 weight percent, and more preferably equal to or greater than 0.5 weight percent based on the total weight of the elastomer composition. The siloxane compound (vi), if present in the elastomer composition of the present invention, is present in an amount of equal to or less than 10 weight percent, preferably equal to or less than 8 weight percent, and more preferably equal to or less than 6 weight percent based on the total weight of the elastomer composition.

In addition, the elastomer composition of the invention advantageously may further comprise at least one additive of the type conventionally added to elastomeric polymer compositions. These additives include, for example, antioxidants, preferred hindered phenolic antioxidants are IRGANOX^{™} 1010 and IRGANOX 1076 antioxidants or an organophosphate such as IRGAFOS^{™} 168 (all available from Ciba-Geigy Corporation); surface tension modifiers; UV stabilizers; scratch/mar additives, such as polydimethyl siloxane (PDMS), functionalized polydimethyl siloxane or other silicone based additive or scratch mar formulations containing erucamide; anti-block agents; dispersants; blowing agents; linear or substantially linear ethylene polymers; LDPE; LLDPE; lubricants; crosslinking agents such as peroxides; antimicrobial agents such as organometallics, isothiazolones, organosulfurs and mercaptans; antioxidants such as phenolics, secondary amines, phosphites and thioesters; nucleating agents such as a benzoate salt or phosphate ester salt or others; antistatic agents such as quaternary ammonium compounds, amines, and ethoxylated, propoxylated or glycerol compounds.

Additional additives include hydrolytic stabilizers; lubricants such as fatty acids, fatty alcohols, esters, fatty amides, metallic stearates, paraffinic and microcrystalline waxes, silicones and orthophosphoric acid esters; mold release agents, such as fine-particle or powdered solids, soaps, waxes, silicones, polyglycols and complex esters such as trimethylolpropane tristearate or pentaerythritol tetrastearate; pigments, dyes and colorants; plasticizers such as esters of dibasic acids (or their anhydrides) with monohydric alcohols such as o-phthalates, adipates and benzoates; heat stabilizers such as organotin mercaptides, an octyl ester of thioglycolic acid and a barium or cadmium carboxylate; ultraviolet light stabilizers used as a hindered amine, an o-hydroxy-phenylbenzotriazole, a 2-hydroxy, 4-alkoxyenzophenone, a salicylate, a cynoacrylate, a nickel chelate and a benzylidene malonate and oxalanilide; and zeolites, molecular sieves, anti-stat agents and other known deodorizers.

Skilled artisans can readily select any suitable combination of additives and additive amounts, as well as the method of incorporating the additive(s) into the composition, without undue experimentation. Typically, each of the above additives, if used, does not exceed 10 weight percent, based on total composition weight, and are advantageously from 0.001 to 10 weight percent, preferably from 0.01 to 5 weight percent, more preferably from 0.1 to 10 weight percent, and more preferably 0.1 to 1 weigh percent.

In producing the elastomer compositions of the present invention, the components for the elastomer composition may be blended by any known method. To obtain a homogeneous elastomer composition, the above mentioned components may be dry blended, prior to compounding using a mixer, such as a Henschel mixer, a tumbler, a ribbon blender, shaken in a bag, or the like. Compounding, or melt blending, may take place in the extruder, calenderer, blow molding machine, foaming equipment, or other kind of forming equipment that melt mixes and makes the fabricated article, this is sometimes referred to as in-line compounding. Alternatively, the elastomeric polymer composition of the present invention may be melt blended by using a conventional kneader, such as a mixing roll, a kneader, a Banbury mixer, an extruder, or the like. In conventional extrusion, the elastomer composition if is obtained, generally, in the form of a pellet. The resulting pellet may then be extruded into a sheet, profile, blow molded article, injection molded article, or thermoformed. Additives may be added to the compounding process neat, in other word in their standard state (i.e., as liquid and/or powders), as concentrates, and/or master batches.

One embodiment of the present invention is a process to make a non-carpet vehicle flooring comprising the elastomer composition described herein above, preferably a truck non-carpeted flooring or an automotive non-carpeted flooring.

In another embodiment of the present invention, the vehicle non-carpet flooring comprising the elastomer composition described herein above is made by injection molding.

### EXAMPLES

Comparative Examples A to D and Examples 1 to 4 are preblend by introducing the oil, SEBS and siloxane fluid first into a small bag and shaken till evenly distributed, dry and free flowing. Next, the remaining ingredients are add and again shaken in the bag until evenly distributed, dry and free flowing. Next, the blend is placed into the hopper of a feeder that feed the material into the throat of a Prism twin screw extruder with 40:1 L/D, co-rotating, and intermeshing screws. The extruder compounds and disperses the ingredients by heating the material and mixing the ingredients in this melted phase. The temperature profile that produces a melt temp of about 180°C to 210°C and with a temperature profile of Zone 1 at 25°C, Zone 2 at 165°C, Zone 3 to Zone 5 at 190°C, Zones 6 and 7 at 185°C and Zones 8 to 10 at 180°C, the die is at 180°C, and extruder RPM is 250.

The following components are used in Comparative Examples A to D and Examples 1 to4:
"PP-1" is a propylene homopolymer having a MFR of 20 g/10 minutes available from Entec;
"PP-2" is a propylene homopolymer having a MFR of 5 g/10 minutes available from Entec;
"SEBS" is a SEBS having 67% ethylene-butylene and 33% styrene copolymer available as CALPRENE^{™} H6170 from Dynasol;
"MAH-g-SESB" is a maleic anhydride grafted SESB available as SCONA^{™} TSKD 9103 from BYK Additives and Instruments;
"MAH-g-HDPE" is a maleic anhydride grafted HDPE available as AMPLIFY^{™} GR 204 from The Dow Chemical Company;
"MAH-g-PP" is a maleic anhydride grafted PP available as PRIEX^{™} 20093 from BYK Additives and Instruments;
"PDMS" is a tri-methyl terminated PDMS having a viscosity of 50,000 cps;
"Mineral Oil" is a paraffinic oil, 600 SUS, with a kinematic viscosity at 40°C of 107 to 120 cSt available as MOTIVA STAR^{™} 12 from Motiva Enterprises, LLC;
"Antioxidant" is an antioxidant available as IRGANOX^{™} B225 from BASF;
"CaCO₃-1" is a surface treated calcium carbonate with an average particle size of 3.2 micron available as HUBERCARB^{™} G35T from Huber Engineered Materials;
"CaCO₃-2" is a non-surface treated, white calcium carbonate having an average particle size of 3 microns available as KC 3 from Kish Company;
"CaCO₃-3" is a non-surface treated, white calcium carbonate having an average particle size of 12 microns available as KW 325 from Kish Company;
"CaCO₃-4" is a non-surface treated, dark colored calcium carbonate having an average particle size of 12 microns available as KC 325 from Kish Company;
   and
"Nucleating Agent" is a concentrate that uses polypropylene as the carrier and the active ingredient is the nucleating agent available as HYPERFORM^{™} Concentrate HI5-5 from Milliken.

The following properties are determined for Comparative Examples A to D and Examples 1 to 4 according to the following tests:
"MFR" is melt flow rate determined according to ISO 1133 at 230°C and 2.16 kg;
"T_{break}", "T_{mod}", and "E_{break}" are tensile at break, tensile modulus, and elongation at break, respectively and are determined according to ASTM D412;
"Shore A" is Shore A hardness determined according to ASTM D2240;
"Stress Whitening" is stress whitening resistance determined according to the Ford Five Finger Scratch Test per FLTM BO 162-01 using weights 2N, 3N, 4.5N, 6N, 7N and visually evaluated for a change in whitening of the scratch with a bright white scratch seen from any angle as unacceptable rated a 5 and no visible whitening of the scratch as the best possible rated at a 1;

And "Odor" is determined by molding 4 plaques and placing them in a sealed PE bag directly after molding. The bags were reopened 24 hours later and evaluated odor by smelling, rated 1 to 5, 1 being the most acceptable and 5 being the least acceptable.

The compositions of Comparative Examples A to D and Examples 1 to 4 and properties are given in Table 1. Amounts are in weight percent based on the total weight of the elastomer composition.

**Table 1**

| Component | | Com Ex A | Com Ex B | Com Ex C | Com Ex D | Ex 1 | Ex 2 | Ex 3 | Ex 4 |
|---|---|---|---|---|---|---|---|---|---|
| | PP-1 | 4 | 9.5 | 9.5 | 8.5 | 8.5 | 8.5 | 7 | 7 |
| | PP-2 | 5.5 | | | | | | | |
| | SEBS | 19.1 | 19.1 | 19.1 | 19.5 | 19.5 | 19.5 | 21.4 | 21.4 |
| | MAH-g-SESB | | 2 | 2 | 2 | 2 | 2 | | |
| | MAH-g-HDPE | | | | | | | 2 | 2 |
| | PDMS | | | 2 | 2 | | 1 | | 1 |
| | Mineral Oil | 33.8 | 31.8 | 29.8 | 30.4 | 32.4 | 31.4 | 32 | 31 |
| | Antioxidant | 0.2 | 0.2 | 0.2 | 0.2 | 0.2 | 0.2 | 0.2 | 0.2 |
| | CaCO₃-1 | 37.4 | | | 37.4 | | | | |
| | CaCO₃-2 | | | | | 37.4 | | 37.4 | |
| | CaCO₃-3 | | | | | | 37.4 | | 37.4 |
| | CaCO₃-4 | | 37.4 | 37.4 | | | | | |
| Property | | | | | | | | | |
| | MFR, g/10 min | 13.9 | 2.5 | 2.1 | 0.5 | 0.7 | 1.9 | 0.01 | 0.2 |
| | T_{break}, psi | 798 | 711 | 741 | 806 | 747 | 682 | 69 | 626 |
| | T_{mod}, psi | 177 | 294 | 318 | 261 | 309 | 276 | 271 | 278 |
| | E_{break}, % | 802 | 754 | 741 | 749 | 707 | 767 | 655 | 690 |
| | Stress Whitening | 5 | 1 | 1 | 1 | 1 | 1 | 1 | 1 |
| | Odor | 1 | 5 | 5 | 4 | 1 | 1 | 1 | 1 |

## Claims

1. An elastomer composition comprising:
(i) from 10 to 30 weight percent of a hydrogenated block copolymer produced by hydrogenating a block copolymer comprising at least one polymer block composed of a vinyl aromatic compound as a principal component and at least one polymer block composed of a conjugated diene compound as a principal component, said hydrogenated copolymer having a number average molecular weight less than or equal to 200,000 Daltons;
(ii) from 5 to 30 weight percent of a propylene homopolymer and/or a propylene copolymer comprising propylene as a principal component;
(iii) from 20 to 40 weight percent of a mineral oil;
(iv) from 0.5 to 10 weight percent of a maleic anhydride grafted polymer;
(v) from 10 to 45 weight percent of a non-surface treated filler;
and
(vi) optionally, from 0.1 to 10 weight percent of a polydimethylsiloxane and/or from 0.1 to 5 weight percent of a nucleating agent,
wherein the filler (v) is a non-surface treated, colorless calcium carbonate.

2. The composition of Claim 1 wherein the hydrogenated block copolymer (i) is styrene-ethylene/butylene-styrene (SEBS).

3. The composition of Claim 1 wherein the propylene polymer is a propylene homopolymer with a MFR equal to or less than 25 g/10 min.

4. The composition of Claim 1 wherein the maleic anhydride grafted polymer (iv) is a maleic anhydride grafted SEBS block copolymer, a maleic anhydride grafted polyethylene, or a maleic anhydride grafted polypropylene.

5. The composition of Claim 4 wherein the maleic anhydride grafted polymer (iv) is a maleic anhydride SEBS block copolymer, a maleic anhydride grafted polypropylene, or a maleic anhydride grafted HDPE.

6. A process to make a vehicle non-carpeted flooring comprising the steps of:
a) forming an elastomer composition comprising:
(i) from 10 to 30 weight percent of a hydrogenated block copolymer produced by hydrogenating a block copolymer comprising at least one polymer block composed of a vinyl aromatic compound as a principal component and at least one polymer block composed of a conjugated diene compound as a principal component, said hydrogenated copolymer having a number average molecular weight less than or equal to 200,000 Daltons;
(ii) from 5 to 30 weight percent of a propylene homopolymer and/or a propylene copolymer comprising propylene as a principal component;
(iii) from 20 to 40 weight percent of a mineral oil;
(iv) from 0.5 to 10 weight percent of a maleic anhydride grafted polymer;
(v) from 10 to 45 weight percent of a filler;
and
(vi) optionally, from 0.1 to 10 weight percent of a polydimethylsiloxane and/or from 0.1 to 5 weight percent of a nucleating agent
and
b) injection molding the elastomer composition into a vehicle non-carpeted flooring,
wherein the filler (v) is a non-surface treated, colorless calcium carbonate.

7. A truck or an automotive non-carpeted flooring made by the process of Claim 6.

## Patentansprüche

1. Eine Elastomerzusammensetzung, die Folgendes beinhaltet:
(i) zu 10 bis 30 Gewichtsprozent ein hydriertes Blockcopolymer, das durch Hydrieren eines Blockcopolymers, das mindestens einen Polymerblock, der aus einer aromatischen Vinylverbindung als Hauptkomponente zusammengesetzt ist, und mindestens einen Polymerblock, der aus einer Verbindung eines konjugierten Diens als Hauptkomponente zusammengesetzt ist, beinhaltet, hergestellt wird, wobei das hydrierte Copolymer ein zahlenmittleres Molekulargewicht von weniger als oder gleich 200 000 Dalton aufweist;
(ii) zu 5 bis 30 Gewichtsprozent ein Propylenhomopolymer und/oder ein Propylencopolymer, das Propylen als Hauptkomponente beinhaltet;
(iii) zu 20 bis 40 Gewichtsprozent ein Mineralöl;
(iv) zu 0,5 bis 10 Gewichtsprozent ein mit Maleinsäureanhydrid gepfropftes Polymer;
(v) zu 10 bis 45 Gewichtsprozent einen nicht oberflächenbehandelten Füllstoff; und
(vi) optional zu 0,1 bis 10 Gewichtsprozent ein Polydimethylsiloxan und/oder zu 0,1 bis 5 Gewichtsprozent ein Nukleierungsmittel,
wobei der Füllstoff (v) ein nicht oberflächenbehandeltes farbloses Calciumcarbonat ist.

2. Zusammensetzung gemäß Anspruch 1, wobei das hydrierte Blockcopolymer (i) Styrol-Ethylen/Butylen-Styrol (SEBS) ist.

3. Zusammensetzung gemäß Anspruch 1, wobei das Propylenpolymer ein Propylenhomopolymer mit einer Schmelze-Massefließrate (MFR) gleich oder weniger als 25 g/10 min ist.

4. Zusammensetzung gemäß Anspruch 1, wobei das mit Maleinsäureanhydrid gepropfte Polymer (iv) ein mit Maleinsäureanhydrid gepfropftes SEBS-Blockcopolymer, ein mit Maleinsäureanhydrid gepfropftes Polyethylen oder ein mit Maleinsäureanhydrid gepfropftes Polypropylen ist.

5. Zusammensetzung gemäß Anspruch 4, wobei das mit Maleinsäureanhydrid gepfropfte Polymer (iv) ein Maleinsäureanhydrid-SEBS-Blockcopolymer, ein mit Maleinsäureanhydrid gepfropftes Polypropylen oder ein mit Maleinsäureanhydrid gepfropftes HDPE ist.

6. Ein Verfahren zum Herstellen eines Fahrzeugbodenbelags ohne Teppich, das die folgenden Schritte beinhaltet:
a) Bilden einer Elastomerzusammensetzung, die Folgendes beinhaltet:
(i) zu 10 bis 30 Gewichtsprozent ein hydriertes Blockcopolymer, das durch Hydrieren eines Blockcopolymers, das mindestens einen Polymerblock, der aus einer aromatischen Vinylverbindung als Hauptkomponente zusammengesetzt ist, und mindestens einen Polymerblock, der aus einer Verbindung eines konjugierten Diens als Hauptkomponente zusammengesetzt ist, beinhaltet, hergestellt wird, wobei das hydrierte Copolymer ein zahlenmittleres Molekulargewicht von weniger als oder gleich 200 000 Dalton aufweist;
(ii) zu 5 bis 30 Gewichtsprozent ein Propylenhomopolymer und/oder ein Propylencopolymer, das Propylen als Hauptkomponente beinhaltet;
(iii) zu 20 bis 40 Gewichtsprozent ein Mineralöl;
(iv) zu 0,5 bis 10 Gewichtsprozent ein mit Maleinsäureanhydrid gepfropftes Polymer;
(v) zu 10 bis 45 Gewichtsprozent einen Füllstoff;
und
(vi) optional zu 0,1 bis 10 Gewichtsprozent ein Polydimethylsiloxan und/oder zu 0,1 bis 5 Gewichtsprozent ein Nukleierungsmittel
und
b) Spritzgießen der Elastomerzusammensetzung zu einem Fahrzeugbodenbelag ohne Teppich,
wobei der Füllstoff (v) ein nicht oberflächenbehandeltes farbloses Calciumcarbonat ist.

7. Ein Lastwagen- oder ein Automobilbodenbelag ohne Teppich, der durch das Verfahren gemäß Anspruch 6 hergestellt ist.

## Revendications

1. Une composition d'élastomère comprenant :
(i) de 10 à 30 pour cent en poids d'un copolymère bloc hydrogéné produit par hydrogénation d'un copolymère bloc comprenant au moins un bloc de polymère constitué d'un composé vinyl aromatique en tant que constituant principal et au moins un bloc de polymère constitué d'un composé diène conjugué en tant que constituant principal, ledit copolymère hydrogéné ayant une masse moléculaire moyenne en nombre inférieure ou égale à 200 000 Daltons ;
(ii) de 5 à 30 pour cent en poids d'un homopolymère de propylène et/ou d'un copolymère de propylène comprenant du propylène en tant que constituant principal ;
(iii) de 20 à 40 pour cent en poids d'une huile minérale ;
(iv) de 0,5 à 10 pour cent en poids d'un polymère greffé par un anhydride maléique ;
(v) de 10 à 45 pour cent en poids d'une charge non traitée en surface ;
et
(vi) facultativement, de 0,1 à 10 pour cent en poids d'un polydiméthylsiloxane et/ou de 0,1 à 5 pour cent en poids d'un agent nucléant,
la charge (v) étant un carbonate de calcium incolore non traité en surface.

2. La composition de la revendication 1 dans laquelle le copolymère bloc hydrogéné (i) est du styrène-éthylène/butylène-styrène (SEBS).

3. La composition de la revendication 1 dans laquelle le polymère de propylène est un homopolymère de propylène avec un MFR égal ou inférieur à 25 g/10 min.

4. La composition de la revendication 1 dans laquelle le polymère greffé par un anhydride maléique (iv) est un copolymère bloc de SEBS greffé par un anhydride maléique, un polyéthylène greffé par un anhydride maléique, ou un polypropylène greffé par un anhydride maléique.

5. La composition de la revendication 4 dans laquelle le polymère greffé par un anhydride maléique (iv) est un copolymère bloc de SEBS anhydride maléique, un polypropylène greffé par un anhydride maléique, ou un PEHD greffé par un anhydride maléique.

6. Un procédé pour réaliser un revêtement sans textile pour véhicule comprenant les étapes consistant à :
a) former une composition d'élastomère comprenant :
(i) de 10 à 30 pour cent en poids d'un copolymère bloc hydrogéné produit par hydrogénation d'un copolymère bloc comprenant au moins un bloc de polymère constitué d'un composé vinyl aromatique en tant que constituant principal et au moins un bloc de polymère constitué d'un composé diène conjugué en tant que constituant principal, ledit copolymère hydrogéné ayant une masse moléculaire moyenne en nombre inférieure ou égale à 200 000 Daltons ;
(ii) de 5 à 30 pour cent en poids d'un homopolymère de propylène et/ou d'un copolymère de propylène comprenant un propylène en tant que constituant principal ;
(iii) de 20 à 40 pour cent en poids d'une huile minérale ;
(iv) de 0,5 à 10 pour cent en poids d'un polymère greffé par un anhydride maléique ;
(v) de 10 à 45 pour cent en poids d'une charge ;
et
(vi) facultativement, de 0,1 à 10 pour cent en poids d'un polydiméthylsiloxane et/ou de 0,1 à 5 pour cent en poids d'un agent nucléant
et
b) mouler par injection la composition d'élastomère en un revêtement de sol sans textile pour véhicule,
la charge (v) étant un carbonate de calcium incolore non traité en surface.

7. Un revêtement de sol sans textile pour camion ou automobile réalisé grâce au procédé de la revendication 6.
